Europäisches Patentamt

European Patent Office

Office européen des brevets

(11) Publication number: **0 045 728**
**B1**

# EUROPEAN PATENT SPECIFICATION

(45) Date of publication of patent specification: **23.10.85**

(21) Application number: **81830138.4**

(22) Date of filing: **31.07.81**

(51) Int. Cl.⁴: **G 05 D 23/24, F 25 D 11/02,
F 25 D 29/00**

(54) Electronic temperature regulator for a refrigerator.

(30) Priority: **31.07.80 IT 6823080**

(43) Date of publication of application:
**10.02.82 Bulletin 82/06**

(45) Publication of the grant of the patent:
**23.10.85 Bulletin 85/43**

(84) Designated Contracting States:
**DE FR GB NL**

(56) References cited:
**AT-A- 325 644
DD-A- 101 745
DE-A-2 054 412
DE-A-2 539 914
DE-A-2 725 227
DE-A-3 010 345
DE-B-2 350 998
US-A-3 363 429
US-A-3 793 847
US-A-4 148 194
US-A-4 187 093**

(73) Proprietor: **INDESIT INDUSTRIA
ELETTRODOMESTICI ITALIANA S.p.A.
Str. Piossasco Km 17
I-10040 Rivalta Turin (IT)**

(72) Inventor: **Alluto, Luigi
Via Montebianco 24
I-10024 Moncalieri (Torino) (IT)**

(74) Representative: **Jacobacci, Filippo et al
c/o JACOBACCI-CASETTA & PERANI S.n.c. Via
Alfieri, 17
I-10121 Torino (IT)**

Courier Press, Leamington Spa, England.

## Description

The present invention relates to an electronic temperature regulator for a refrigerator having at least a first and a second compartment with a first and a second evaporator respectively, which are connected in series in a single refrigeration circuit, the temperature in the first compartment being kept lower than in the second compartment; the regulator comprising a first temperature sensor means for sensing the temperature of said second evaporator, a thermostatic circuit connected to said first temperature sensor means, and switch means controlled by the thermostatic circuit for starting and stopping the operation of the said refrigeration circuit when the temperature of the said second evaporator reaches an upper and a lower threshold value, respectively.

An electronic temperature regulator of the above defined kind is disclosed in DE—A—2 054 412. This known regulator in the operation determines the deactivation of the compressor of the refrigerator when the temperatures in said first and second compartments (the freezer and the fresh food compartments in a house-hold refrigerator) have been both brought under respective lower threshold values.

When a large amount of unfrozen food is placed inside the freezer compartment of a refrigerator provided with a regulator according to DE—A—2 054 412, the compressor of the refrigerator is kept running for a rather long lapse of time in order to adequately lower the temperature of the food in the freezer compartment. Correspondingly, the temperature in the fresh food compartment is also lowered. Till when the temperature in the freezer compartment is too high, the compressor will go on running independently of how low the temperature in the fresh food compartment can fall. Thus, it may happen that the temperature in the latter compartment falls below 0°C, what is highly undesirable.

It is the object of the invention to provide an electronic temperature regulator which allows the above described inconvenience to be overcome.

This object is achieved according to the invention by means of the electronic temperature regulator as claimed in the appended Claim 1.

Different solutions of the same technical problem of preventing any overcooling of the fresh food compartment in a two-compartment refrigerator are disclosed in US—A—3 793 847 as well as in DS—A—101 745.

Further objects and advantages of the present invention will be now described with reference to the attached drawings in which:

— Fig. 1 shows a refrigerator provided with a temperature regulator according to the present invention;
— Fig. 2 is an electric diagram of the temperature regulator according to the invention.

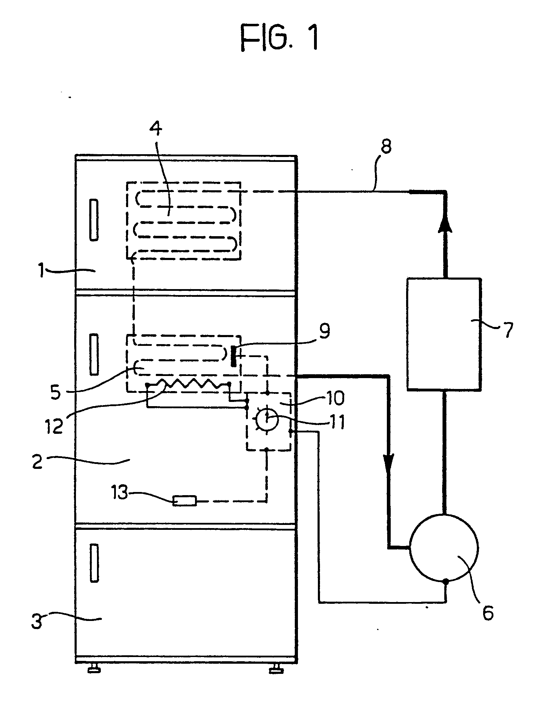

It is known that the temperature inside as refrigerator is regulated by extracting heat by means of an evaporator in which a suitable fluid, e.g. freon, is caused to expand. Expansion occurs after the fluid has been compressed by a compressor driven by an electric motor, and after flowing through a condenser, in which it is cooled and condensed, and an expansion element which regulates the flow towards the evaporator. Fig. 1 shows a refrigerator divided into three compartments: compartment 1 or "freezer", for storing frozen food, compartment 2 for fresh foods, and compartment 3 or "cellar compartment".

Compartment 1 houses an evaporator 4, and compartment 2 an evaporator 5. Compartment 3 needs no evaporator in that the cooling effect is created by heat exchange with compartment 2 through a partition between the two compartments, made of suitable heat-transparent material, and two openings allowing air to circulate between the two compartments.

As shown in Fig. 1, the refrigerator is provided with a single regrigeration circuit, shown schematically, which includes a compressor 6 followed by a condenser 7 and a capillary tube 8 which regulates the flow of the refrigerating fluid. The temperature regulator of the refrigerator comprises a temperature-sensitive element 9, placed so as to contact evaporator 5 and connected to a temperature-regulating circuit 10 comprising a thermostat 11 which will be described in greater details hereafter. Depending on the temperature of evaporator 5, the temperature regulator 10 enables the activation of either the motor of compressor 6 or a defrosting resistor 12 which, by dissipating heat, defrosts evaporator 5 of the fresh food compartment 2.

The regulating circuit 10 starts the compressor when the temperature-sensitive element 9 senses a temperature of about +5°C whereas it stops the compressor and commences defrosting when the temperature detected by element 9 falls within the −18 to −26°C range, depending on the setting of the thermostat 11. To overcome the above mentioned drawbacks, according to the invention a second temperature-sensitive element 13 is provided inside the fresh food compartment 2 in a suitable place, e.g. at the bottom, where the air is coldest, to detect whether the temperature in the surroundings exceeds or falls below 0.2C.

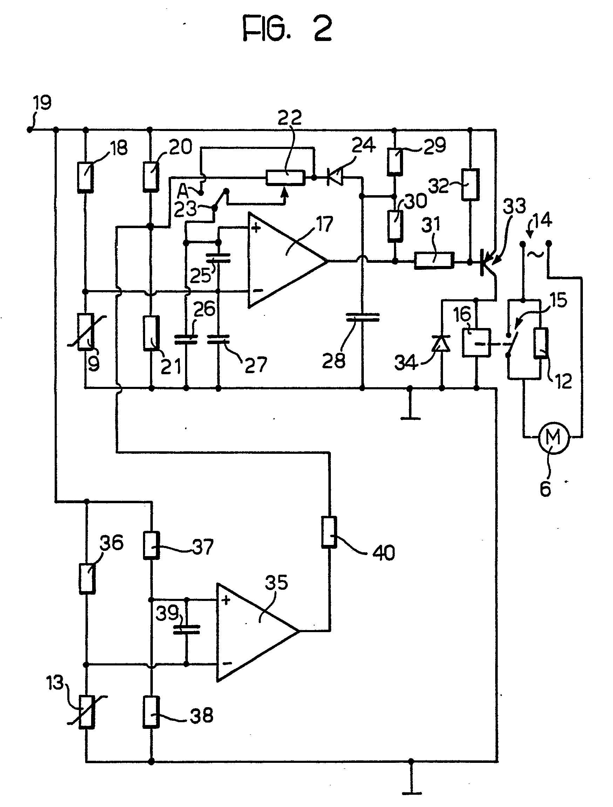

The invention will now be described in greater details with reference to Fig. 2 in which numeral 6 indicates the winding of the electric motor by which the compressor is driven. Winding 6 is supplied through terminals 14 to which the a.c. electricity mains is connected. Electric power is supplied to said winding when a switch 15, which is part of a relay 16, is closed. When the switch 15 is open, the defrosting resistor 12 (shown in Fig. 1) inside the fresh food compartment is supplied. Relay 16 is activated by the electric circuit shown in Fig. 2 in which numeral 9, as in Fig. 1, indicates a temperature-sensitive element consisting of a negative temperature coefficient (NTC) thermistor placed in known way inside the fresh food compartment in contact with the evaporator. Thermistor 9 has one terminal connected to ground and the other terminal connected to the inverting (−) input of a voltage comparator circuit 17 and to one terminal of resistor 18, the other terminal of which is connected to the d.c. power supply through positive terminal 19. Two resistors 20 and 21 are connected in series between terminal 19 and ground while their junction is connected to one end of a potentiometer 22, the slider of which is connected to a first branch of a switch 23. The other end of potentiometer 22 is connected to a second branch of switch 23 and to the cathode of a diode 24. Switch 23 is connected to the non-inverting (+) input of comparator 17. For protecting the circuit from electromagnetic disturbances three capacitors 25, 26 and 27 are connected between the two inputs of comparator 17, the non-inverting input and ground and the inverting input and ground, respectively. The anode of diode 24 is connected to ground through a anti-disturbance capacitor 28 and to the junction of two resistors 29, 30 which are series-connected between terminal 19 and the output of comparator 17. The latter is also connected to one end of a resistor 31, the other end of which is connected to terminal 19 through another resistor 32. Resistor 31 is also connected to the base of a transistor 33, having the emitter connected to terminal 19 and the collector coupled to the coil of relay 16. A diode 34, for protecting transistor 33, is connected across said coil.

According to the invention a second temperature-sensitive element 13, consisting of an NTC thermistor is located at the bottom of the fresh food compartment. Thermistor 13 has one end connected to ground and the other end coupled t the inverting (−) input of a second voltage comparator circuit 35 and to a resistor 36 connected to positive terminal 19. Two resistors 37, 38 are connected in series between said terminal 19 and ground while their junction is connected to the non-inverting (+) input of comparator 35. A capacitor 39 is connected between the two inputs of said comparator 35 for the suppression of disturbances. Finally, a resistor 40 is connected between the output of comparator 35 and the junction of resistors 20 and 21.

The comparator circuits 17 and 35 can be made up using National Semiconductor LM 311 integrated circuits, the pin connection details of which can be found in the manufacturer's catalogues.

The following is a list of components which can be employed in the circuit shown in Fig. 2:

9: K243 thermistor, 9.5 KΩ
13: K243 thermistor, 9.4 KΩ
12: 2.7 KΩ, 18 W resistor
17: LM 311 I.C.
18: 4.87 KΩ resistor
20: 37.4 KΩ resistor

28: 1 µF capacitor
29: 16.5 KΩ resistor
30: 3.9 KΩ resistor
31: 10 KΩ resistor
32: 1.2 KΩ resistor
33: BC 308 transistor
34: 1N914 diode
21: 13.7 KΩ resistor .
22: 5 KΩ potentiometer
24: 1N914 diode
25: 0.1 µF capacitor
26: 0.1 µF capacitor
27: 0.1 µF capacitor
35: LM 311 I.C.
36: 4.87 KΩ resistor
37: 37.4 KΩ resistor
38: 16.5 KΩ resistor
39: 0.1 µF capacitor
40: 4.7 KΩ resistor

The above described circuit operates as follows.

Thermistor 9 is a branch of a bridge circuit, the other three branches of which are represented by resistors 18, 20 and 21.

Any off-balancing of the bridge circuit, caused by changes in the resistance of thermistor 9, is detected by the comparator circuit 17 which is highly sensitive and has a first voltage threshold represented by the voltage at its non-inverting (+) input terminal. As soon as the temperature detected by thermistor 9 rises over a given level, the voltage at the inverting (−) input of comparator 17 falls below the said threshold and the output of comparator 17 switches to almost the same voltage supplied to terminal 19 so as to disable transistor 33. In this way, relay 16 is de-energized so as to close switch 15 and activate the motor and the compressor, which then determines a reduction of temperature inside the refrigerator.

The comparator circuit 17 is provided with hysteresis so that, once its output voltage has risen almost to the voltage at terminal 19, part of that voltage is coupled back to the non-inverting (+) input by means of the resistive divider consisting of resistors 29, 30 and diode 34 which under these conditions is conductive, and potentiometers 22. In this way, a second voltage threshold, different from the first, is created at the non-inverting (+) terminal of the comparator circuit 17. The change in the voltage threshold alters the value of the temperature inside the refrigerator at which the motor is stopped with respect to the temperature value at which it is started. The importance of the hysteresis lies in the fact that, in order that the refrigerator work properly, it is necessary that it operates for a certain lengh of time, during which the temperature detected by thermistor 9 falls some 20°C or more below the temperature at which the motor started, before the latter is stopped again. Consequently, when the temperature detected by thermistor 9 inside the refrigerator falls below this new threshold value, the voltage at the inverting

(−) input of comparator 17 rises over the second threshold at the non-inverting (+) input and the output of comparator 17 switches quickly to ground so as to saturate transistor 33. This causes relay 16 to be energized with the result that switch 15 is opened and motor 6 is stopped. The defrosting resistor 12, which under these conditions is on, now heats up to defrost the evaporator of the fresh food compartment. It must be pointed out that, in this case, the current flowing in resistor 12 also flows through the compressor motor, though it is not sufficient to start it up. During the intervals in which the output of comparator 17 is at a low voltage level, i.e. when the defrosting resistor 12 is operating, diode 24 does not conduct. The voltage at the non-inverting (+) input of comparator 17 is therefore fixed regardless of the setting of potentiometer 22 or the position of switch 23 since the non-inverting (+ input has a very high input impedance and consequently it draws a very low input current which causes a negligible voltage drop across potentiometer 22. Furthermore, being in contact with the evaporator of the fresh food compartment, the thermistor 9 senses the temperature of the evaporator rather than the temperature of the compartment itself. In other words, the circuit is designed so that motor 6 starts running when thermistor 9 senses a temperature of +5°C or over, regardless of the setting of potentiometer 22, i.e. the thermostat.

During the intervals in which the compressor is running, i.e. when the output of comparator 17 is at a high voltage level, diode 24 starts conducting and potentiometer 22 allows the voltage threshold at the non-inverting (+) input of comparator 17 to be adjusted according to the slider setting.

The motor 6 is therefore disactivated to start the defrosting when thermistor 9 senses a temperature ranging from −18°C to −26°C depending on the position of the slider of said potentiometer 22.

For rapidly freezing large amounts of unfrozen food just placed inside the freezer compartment, the switch 23 is to be brought to its A position. In that condition it enables the thermostat to be set to maximum cooling regardless of the slider setting of potentiometer 22. In such a situation, a maximum cooling capacity is needed for freezing the food as quickly as possible (to meet the standard requirements according to which refrigerators with a freezer must be capable of freezing a predetermined quantity of food in 24 hours). In the refrigerators having a single refrigerating circuit, in order to prevent the fresh food temperature from falling below 0°C according to the invention a second thermistor 13, as shown in Fig. 1, is located at the bottom of the fresh food compartment where the air is coldest. Thermistor 13 forms parts of a second bridge circuit arrangement including resistors 13, 36, 37 and 38, which is connected to the second comparator 35 which has no hysteresis and therefore a single voltage threshold (at its non-inverting (+) input), provided by the voltage divider consisting of resistors 37 and 38. With the above-listed components, the temperature threshold sensed by thermistor 13 is 0°C. When the temperature inside the fresh food compartment tends to fall below 0°C, the voltage at the inverting (−) input of comparator 35 will be greater than the voltage at the non-inverting (+) input, with the result that the output of comparator 35 will be brought down to low voltage, i.e. practically to ground, and resistor 40 will be connected in parallel to resistor 21. The voltage at the non-inverting (+) input of comparator 17 will be then brought immediately below the voltage at the inverting (−) input determined by thermistor 9, with the result that the output of comparator 17 switches to low level so as to saturate transistor 33 and stop motor 6.

Concerning the lower temperature threshold value, at which the compressor is stopped, thermistor 13 operates in exactly the same way as thermistor 9.

As no hysteresis is provided for on comparator 35, when the temperature sensed by thermistor 13 is again over 0°C the output of comparator 35 switches back to high voltage. The temperature regulator circuit is however designed so that, under these conditions, resistor 40 is series-connected to the very high output resistance of comparator 35 so that it has no effect on the voltages across the bridge resistors 9, 18, 20 and 21 connected to the input of comparator 17. Consequently, when the temperature inside the fresh food compartment is over 0°C, the circuit portion comprising thermistor 13 is not activated and has no effect on the remaining portion of the circuit which includes thermistor 9.

The advantage of providing the second thermistor 13 is that switch 23 can safely be set to the maximum cooling position A for fast freezing operation with no danger of freezing the food in the fresh food compartment as well. When the temperature inside the fresh food compartment falls below 0°C, the circuit portion controlled by thermistor 13 is activated to stop the compressor.

A further advantage is that this occurs also during the normal operation of the refrigerator and is not merely limited to the fast freezing operation. Since the circuitry connected to thermistor 13 is permanently operative, it can "watch" the temperature inside the fresh food compartment at all times.

A further advantage of the device described is that the cooling capacity of the refrigerator can be calculated so as to economise during the normal operation.

A further advantage is represented by the reduction of the time necessary to freeze the food placed inside the freezer compartment. This is achieved by delaying as long as possible, after the food has been introduced into the freezer, the time at which the compressor start-and-stop cycles become more frequent as a consequent of the temperatur decrease of the refrigerating fluid which reaches the evaporator of the fresh food compartment, and by keeping the compressor running a little bit longer during time periods in which the defrosting resistor would otherwise be activated. This is possible thanks to thermistor 13 which enables the thermostat to be kept in the fast freeze position, so as to prevent the normal refrigeration cycle conditions from being reached for as long as possible and bring about a maximum temperature drop in both refrigeration compartments.

In order to more clearly explain the above, let us assume that some food at room or even higher temperature is introduced into the freezer. The fluid expanded in the freezer evaporator absorbs a considerable amount of heat from the food. The temperature of the fluid which expands in the fresh food compartment evaporator increases too, until all the freezing latent heat has been extracted from the food placed in the freezer compartment. Since the first temperature-sensitive element 9 is placed in contact with the evaporator of the fresh food compartment, it is influenced more by the temperature of that evaporator than by the temperature inside the compartment. Consequently in that situation the temperature detected by thermistor 9 will be relatively high and such as to keep the compressor running for a rather long time and to lower the temperature of the system rather quickly. After all the freezing latent heat has been extracted, the food being frozen must yield even more heat and this must happen rather quickly if it is to be brought down to a final freezing temperature of say −18°C. However, at this point, the temperature detected by the thermistor starts falling considerably causing more frequent start-stop cycles of the compressor accompanied by a sharp increase in the time necessary to completely freeze the food in the freezer compartment since the time intervals in which the defrosting resistor is operative and the compressor off are lost. On the other hand, any attempt to reduce the freezing time by setting the thermostat to the MAX position may also result in the food in the fresh food compartment being frozen too.

To those skilled in the art, it will be apparent that a number of changes can be made with respect to the device described by way of a non-limiting example without, however, departing from the scope of the present invention.

For example, in place of or in addition to the secbnd temperature-sensitive element 13 placed at the bottom of the fresh food compartment, the refrigerator could be provided with a further temperature-sensitive element, forming part of another voltage comparator circuit, placed in thermal contact with the motor of the compressor for stopping the compressor when the temperature of said compressor exceeds a given predetermined value.

Furthermore, the temperature threshold determined by the circuit portion comprising thermistor 13 and comparator 35 could be made adjustable by connecting a manually operable potentiometer in series with resistor 37 or thermistor 13, in a location easily accessible for the user.

Finally, an additional defrosting resistor controlled by comparator 35 could be placed in the fresh food compartment. Thus, when the temperature in the fresh food compartment falls below the threshold value set by the circuit portion comprising thermistor 13 and comparator 35, this additional defrosting resistor would accelerate the defrosing of the fresh food compartment and consequently the time necessary for freezing the food in the freezer compartment would be reduced.

## Claims

1. An electronic temperature regulator for a refrigerator having at least a first and a second compartment (1, 2) with a first and a second evaporator (4, 5) respectively, which are connected in series in a single refrigeration circuit (6, 7, 8), the temperature in the first compartment (1) being kept lower than in the second compartment (2); the regulator comprising a first temperature sensor means (9) for sensing the temperature of said second evaporator (5), a thermostatic circuit (10) connected to said first temperature sensor means (9), and switch means (15, 16, 33) controlled by the thermostatic circuit (10) for starting and stopping the operation of the said refrigeration circuit when the temperature of the said second evaporator (5) reaches an upper and a lower threshold value, respectively; characterized in that it comprises further a second temperature sensor means (13) placed inside the said second compartment (2) where the air is coldest and coupled to the said thermostatic circuit (10) so as to stop, through said thermostatic circuit and said switch means, the operation of the refrigeration circuit (6, 7, 8) when the temperature in the said second compartment (2) where the air is coldest, falls below a predetermined minimum temperature value.

2. An electronic temperature regulator according to claim 1, characterized in that the said thermostatic circuit (10) comprises a first threshold comparator circuit (17, 22, 23, 24, 30) with hysteresis having a non-inverting (+) input maintained at a first reference voltage level by means of a resistive voltage divider (20, 21, 22), and an inverting (−) input coupled to the said first temperature sensor means (9).

3. An electronic temperature regulator according to claim 1, characterized in that the said switch means comprise a transistor (33) controlled by the output voltage of the said first comparator circuit (17, 22, 23, 24, 30) and a relay (15, 16) which is controlled by the output current of the said transistor (33) and which in turn controls the operation of the said refrigeration circuit (6, 7, 8).

4. An electronic temperature regulator according to claim 2, characterized in that said thermostatic circuit (10) comprises further a second threshold comparator circuit (35) with a first input maintained at a second reference voltage level by means of a second resistive voltage divider (37, 38) and a second input which is coupled to said second temperature sensor means (13), and a resistor (40) which is connected to the output of said second comparator circuit (35) and which, when the temperature detected by the said second temperature sensor means (13) falls below the said predetermined minimum value, is coupled to the said first voltage divider (20, 21, 22) by the switching of the output of said second comparator circuit (35) so as to cause a change of the said first reference voltage level.

5. An electronic temperature regulator according to claim 2, characterized in that the said second temperature sensor means is a temperature-sensitive resistor (13), whereby its resistance changes are converted into a voltage signal which is supplied to the second input of said second comparator circuit (35).

6. An electronic temperature regulator according to claim 1, characterized in that the said thermostatic circuit (10) includes potentiometer means (22) arranged so as to allow an adjustment of the said lower temperature threshold value within a predetermined range without substantially affecting the said upper temperature threshold value.

7. An electronic temperature regulator according to claims 5 and 6, characterized in that the said thermostatic circuit (10) comprises a first potentiometer (22) series-connected to a diode (24) between the output and the non-inverting (+) input of the said first comparator circuit (17) so as to modify the said first reference voltage level and consequently the said lower temperature threshold value according to the position of the slide of said first potentiometer (22) without substantially affecting the said upper temperature threshold value.

8. An electronic temperature regulator according to claim 1, characterized in that potentiometer means are provided for adjusting the said minimum temperature value within a predetermined range.

9. An electronic temperature regulator according to claim 4 and 8, characterized in that the said potentiometer means comprise a second potentiometer connected with the said second voltage divider (37, 38) so as to allow the adjustment of said second reference voltage level.

10. An electronic temperature regulator according to claim 1, characterized in that it comprises further an additional defrosting resistor (12) which is energized at a temperature lower than the said minimum value, so as to accelerate the defrosting action.

## Revendications

1. Régulateur électronique de température pour un réfrigérateur ayant au moins un premier et un second compartiments (1, 2) ayant une premier et un second évaporateurs (4, 5) respectivement, qui sont branchés en série dans un circuit de réfrigération unique (6, 7, 8), la température du premier compartiment (1) étant maintenue inférieure à celle du second compartiment (2); le régulateur comprenant un premier moyen détecteur de température (9) pour détecter la température dudit second évaporator (5), un circuit thermostatique (10) connecté audit premier moyen détecteur de température (9), et un moyen de commutation (15, 16, 33) commandé par le circuit thermostatique (10) pour déclencher et interrompre le fonctionnement dudit circuit de réfrigération lorsque la température dudit second évaporateur (5) a respectivement des valeurs de seuil supérieure et inférieure, caractérisé en ce qu'il comprend en outre un second moyen détecteur de température (13) disposé à l'intérieur dudit second compartiment (2) dans lequel l'air est le plus froid et couplé audit circuit thermostatique (10) de façon à interrompre, par l'intermédiaire dudit circuit thermostatique et dudit moyen de commutation, le fonctionnement du circuit de réfrigération (6, 7, 8) lorsque la température dudit second compartiment (2) dans lequel l'air est le plus froid, descend au-dessous d'une valeur de température minimale prédéterminée.

2. Régulateur électronique de température selon la revendication 1, caractérisé en ce que ledit circuit thermostatique (10) comprend un premier circuit comparateur de seuil (17, 22, 23, 24, 30) à hystérésis ayant une entrée non inverseuse (+) maintenue à un premier niveau de tension de référence au moyen d'un diviseur de tension résistif (20, 21, 22), et une entrée inverseuse (−) couplée audit premier moyen détecteur de température (9).

3. Régulateur électronique de température selon la revendication 1, caractérisé en ce que ledit moyen de commutation comprend un transistor (33) commandé par la tension de sortie dudit premier circuit comparateur (17, 22, 23, 24, 30) et un relais (15, 16) qui est commandé par le courant de sortie dudit transistor (33) et qui à son tour, commande le fonctionnement dudit circuit de réfrigération (6, 7, 8).

4. Régulateur électronique de température selon la revendication 2, caractérisé en ce que ledit circuit thermostatique (10) comprend en outre un second circuit comparateur de seuil (35) ayant une première entrée maintenue à un second niveau de tension de référence au moyen d'un second diviseur de tension résistif (37, 38) et une seconde entrée qui est couplée audit second moyen de détection de température (13), et une résistance (40) qui est connectée à la sortie dudit second circuit comparateur (35) et qui, lorsque la température détectée par ledit second moyen détecteur de température (13) descend en-dessous de ladite valeur minimale prédéterminée, est couplée audit premier diviseur de tension (20, 21, 22) par la commutation de la sortie dudit second circuit comparateur (35) de façon à provoquer une modification dudit premier niveau de tension de référence.

5. Régulateur électronique de température selon la revendication 2, caractérisé en ce que ledit second moyen de détection de température est une résistance sensible à la température (13), au moyen de laquelle ses variations de température sont converties en un signal de tension qui est fourni à la seconde entrée dudit second circuit comparateur (35).

6. Régulateur électronique de température selon la revendication 1, caractérisé en ce que ledit circuit thermostatique (10) comporte un potentiomètre (22) monté de façon á permettre un ajustement de ladite valeur de seuil de température inférieure dans une plage prédéterminée, dans affecter sensiblement ladite valeur de seuil de température supérieure.

7. Régulateur électronique de température selon les revendications 5 et 6, caractérisé en ce que ledit circuit thermostatique (10) comprend un premier potentiomètre (22) connecté en série à une diode (24) entre la sortie de l'entrée non inverseuse (+) dudit premier circuit comparateur (17) de façon à modifier ledit premier niveau de tension de référence et par conséquent, ladite valeur de seuil de température inférieure, en fonction de la position du curseur dudit premier potentiomètre (22) sans affecter sensiblement ladite valeur de seuil de température supérieure.

8. Régulateur électronique de température selon la revendication 1, caractérisé en ce que le potentiomètre est utilisé pour ajuster ladite valeur de température minimale dans une plage prédéterminée.

9. Régulateur électronique de température selon les revendications 4 et 8, caractérisé en ce que ledit potentiomètre comprend un second potentiomètre connecté audit second diviseur de tension (37, 38) de façon à permettre l'ajustement dudit second niveau de tension de référence.

10. régulateur électronique de température selon la revendication 1, caractérisé en ce qu'il comprend en outre une résistance de dégivrage supplémentaire (12) qui est activée à une température inférieure à ladite valeur minimale, de façon à accélérer l'action de dégivrage.

**Patentansprüche**

1. Elektronischer Temperaturregler für ein Gefriergerät, welches mindestens ein erstes und ein zweites Abteil (1, 2) mit einem ersten bzw. zweiten Verdampfer (4, 5), die in einem einzigen Kühlkreislauf (6, 7, 8) in Reihe geschaltet sind, aufweist, wobei die Temperatur in dem ersten Abteil (1) niedriger gehalten wird als in dem zweiten Abteil (2), umfassend eine erste Temperaturfühleinrichting (9) zum Fühlen der Temperatur des zweiten Verdampfers (5), einen Thermostatkreis (10), der an die erste Temperaturfühleinrichting (9) angeschlossen ist, und eine von dem Thermostatkreis (10) gesteuerte Schaltanordnung (15, 16, 33) zum Starten und Anhalten des Betriebs des Kühlkreislaufs, wenn die Temperatur des zweiten Verdampfers (5) einen oberen bzw. einen unteren Schwellenwert erreicht, dadurch gekennzeichnet, daß weiterhin eine zweite Temperaturfühleinrichtung (13) vorgesehen ist, die im Inneren des zweiten Abteils (2), wo die Luft am kältesten ist, angeordnet und an den Thermostatkreis (10) gekoppelt ist, um mittels des Thermostatkreises und der Schaltanordnung den Betrieb des Kühlkreislaufs (6, 7, 8) anzuhalten, wenn die Temperatur in dem zweiten Abteil (2) dort, wo die Luft am kältesten ist, unter einen vorbestimmten Minimum-Temperaturwert abfällt.

2. Elektronischer Temperaturregler nach Anspruch 1, dadurch gekennzeichnet, daß der Thermostatkreis (10) eine erste Schwellenwert-Vergleicherschaltung (17, 22, 23, 24, 30) mit Hysterese aufweist, die einen nichtinvertierenden (+) Eingang aufweist, der mittels eines Widerstands-Spannungsteilers (20, 21, 22) auf einer ersten Bezugsspannung gehalten wird, und einen invertierenden (−) Eingang aufweist, der an die erste Temperaturfühleinrichtung (9) angeschlossen ist.

3. Elektronischer Temperaturregler nach Anspruch 1, dadurch gekennzeichnet, daß die Schaltanordnung einen von der Ausgangsspannung der ersten Vergleicherschaltung (17, 22, 23, 23, 30) gesteuerten Transistor (33) und ein Relais (15, 16) aufweist, welches vom Ausgangsstrom des Transistors (33) gesteuert wird und seinerseits den Betrieb des Kühlkreislaufs (6, 7, 8) steuert.

4. Elektronischer Temperaturregler nach Anspruch 2, dadurch gekennzeichnet, daß der Thermostatkreis (10) außerdem eine zweite Schwellenwert-Vergleicherschaltung (35) aufweist, von der ein erster Eingang mittels einen zweiten Widerstands-Spannungsteilers (37, 38) auf einem zweiten Bezugsspannungspegel gehalten wird, und von der ein zweiter Eingang an die zweite Temperaturfühleinrichtung (13) angeschlossen ist, und einen Widerstand (40) aufweist, der an den Ausgang der zweiten Vergleicherschaltung (35) angeschlossen ist und, wenn die von der zweiten Temperaturfühleinrichtung (13) erfaßte Temperatur unter den vorbestimmten Minimum-Wert abfällt, durch das Umschalten des Ausgangssignals der zweiten Vergleicherschaltung (35) an den ersten Spannungsteiler (20, 21, 22) gekoppelt wird, um eine Änderung des ersten Bezugsspannungspegels zu verursachen.

5. Elektronischer Temperaturregler nach Anspruch 2, dadurch gekennzeichnet, daß die zweite Temperaturfühleinrichtung ein temperaturempfindlicher Widerstand (13) ist, dessen Widerstandsänderungen in ein Spannungssignal umgesetzt werden, welches dem zweiten Eingang der zweiten Vergleicherschaltung (35) zugeführt wird.

6. Elektronischer Temperaturregler nach Anspruch 1, dadurch gekennzeichnet, daß der Thermostatkreis (10) eine Potentiometeranordnung (22) enthält, die derart angeordnet ist, daß sie eine Einstellung des unteren Temperaturschwellenwerts innerhalb eines vorbestimmten Bereichs ermöglicht, ohbe daß der obere Temperaturschwellenwert nennenswert beeinflußt wird.

7. Elektronischer Temperaturregler nach Anspruch 5 und 6, dadurch gekennzeichnet, daß der Thermostatkreis (10) ein zu einer Diode (24) in Reihe geschaltetes erstes Potentiometer (22) zwischen dem Ausgang und dem nichtinvertierenden (+) Eingang der ersten Vergleicherschaltung (17) aufweist, um den ersten Bezugsspannungspegel und demzufolge den unteren Temperaturschwellenwert nach Maßgabe der Stellung des Schleiferarms des ersten Potentiometers (22) zu modifizieren, ohne den oberen Temperaturschwellenwert wesentlich zu beeinflussen.

8. Elektronischer Temperaturregler nach Anspruch 1, dadurch gekennzeichnet, daß eine Potentiometeranordnung vorgesehen ist zum Einstellen des Minimum-Temperaturwerts innerhalb eines vorbestimmten Bereichs.

9. Elektronischer Temperaturregler nach Anspruch 4 und 8, dadurch gekennzeichnet, daß die Potentiometeranordnung ein zweites Potentiometer, das an den zweiten Spannungsteiler (37, 38) angeschlossen ist, aufweist, un die Einstellung des zweiten Bezugsspannungspegels zu ermöglichen.

10. Elektronischer Temperaturregler nach Anspruch 1, dadurch gekennzeichnet, daß er außerdem einen zusätzlichen Abtau-Widerstand (12) aufweist, der bei einer unterhalb des Minimum-Werts liegenden Temperatur erregt wird, um den Abtauvorgang zu beschleunigen.

# FIG. 1

# FIG. 2